(19) Europäisches Patentamt / European Patent Office / Office européen des brevets

(11) **EP 2 318 820 B1**

(12) **FASCICULE DE BREVET EUROPEEN**

(45) Date de publication et mention de la délivrance du brevet:
**12.12.2012 Bulletin 2012/50**

(21) Numéro de dépôt: **09740436.2**

(22) Date de dépôt: **05.08.2009**

(51) Int Cl.:
***G01N 15/14*** *(2006.01)*

(86) Numéro de dépôt international:
**PCT/FR2009/051559**

(87) Numéro de publication internationale:
**WO 2010/026328 (11.03.2010 Gazette 2010/10)**

(54) **PROCEDE ET DISPOSITIF DE CLASSIFICATION, DE VISUALISATION ET D'EXPLORATION DE DONNEES BIOLOGIQUES**

VERFAHREN UND VORRICHTUNG ZUR KLASSIFIZIERUNG, PRÄSENTATION UND ANALYSE BIOLOGISCHER DATEN

METHOD AND DEVICE FOR CLASSIFYING, DISPLAYING, AND EXPLORING BIOLOGICAL DATA

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **05.09.2008 FR 0855986**

(43) Date de publication de la demande:
**11.05.2011 Bulletin 2011/19**

(73) Titulaire: **HORIBA ABX SAS**
**34000 Montpellier (FR)**

(72) Inventeur: **RAIMBAULT, Sébastien**
**F-34380 Argelliers (FR)**

(74) Mandataire: **Domange, Maxime**
**Cabinet Beau de Lomenie**
**232, avenue du Prado**
**13295 Marseille Cedex 08 (FR)**

(56) Documents cités:
| | |
|---|---|
| **WO-A-00/11476** | **WO-A-2006/015056** |
| **FR-A- 2 570 192** | **FR-A- 2 733 596** |
| **FR-A- 2 873 813** | **FR-A- 2 895 087** |
| **US-A- 5 795 727** | **US-A1- 2002 040 277** |
| **US-A1- 2008 172 185** | **US-B1- 6 524 793** |
| **US-B2- 7 369 696** | |

**Description**

Arrière-plan de l'invention

La présente invention se rapporte au domaine général de l'analyse de liquides biologiques et plus particulièrement dans le domaine des automates pour analyse de liquide biologiques.

Plus précisément l'invention concerne les procédés de classification de populations cellulaires par comptage et discrimination à partir d'un traitement de données telles qu'issues d'un dispositif d'analyse de liquide biologique. Un tel procédé est destiné à être utilisé dans un automate d'analyse.

La possibilité d'analyser un grand nombre de structures à l'échelle cellulaire ou sub-cellulaire présente un intérêt considérable en recherche fondamentale que ce soit pour des études de médicament ou encore comme outil de diagnostic. L'analyse systématique d'un grand nombre de cellules biologiques permet d'approcher la biologie par la statistique, c'est à dire qu'une ou plusieurs des propriétés cellulaires sont étudiées sur un grand nombre de cellules.

La cytométrie en flux est une des techniques adaptées à l'étude statistique de populations cellulaires car les cellules sont étudiées une à une sur un échantillon de plusieurs centaines ou milliers de cellules.

Par une préparation adaptée des cellules, généralement effectué par introduction d'un colorant ou d'un agent fluorescent plus communément appelée « sonde moléculaire », des informations relatives à ces cellules sont accessibles au biologiste. Il s'agit notamment de la détermination du contenu intracellulaire comme l'ADN, l'ARN, les protéines, les espèces ioniques, le contenu en hémoglobine. L'utilisation de sondes moléculaires associant, selon le principe des antigènes de surface, un anticorps et un luminophore permet de révéler des fonctions spécifiques localisées à la surface des membranes des cellules.

Les principes de la cytométrie en flux sont les suivants. Les objets microscopiques à analyser sont transportés par une veine liquide au point de focalisation d'un faisceau de lumière, généralement un laser. Des détecteurs sont positionnés selon des axes de visée spécifiques dans le but de collecter les signaux d'interaction lumière-matière.

Un premier détecteur, placé au voisinage de l'axe du faisceau laser incident, mesure la diffraction aux petits angles : généralement, il est dimensionné pour être sensible aux faibles fréquences spatiales, c'est à dire au volume de la particule et de son indice de réfraction. Le faisceau laser direct n'ayant pas interagi avec cette particule est bloqué par un masque.

D'autres détecteurs peuvent être placés à 90° de l'axe du faisceau incident. La lumière détectée est analysée selon une ou plusieurs composantes spectrales correspondant aux lumières de fluorescence ou de diffraction.

Des mesures électriques sont aussi réalisées telle que la mesure de résistivité par le principe de porte électronique bien connu de l'homme de l'art. Cette technique est par exemple détaillée dans l'article de Volker Kachel " Electrical Resistance Pulse Sizing: Coulter Sizing" paru dans Flow Cytometry and sorting, Second Edition, 1990, Wiley-Liss, Inc Editor, p. 45-80.

Dans son principe, une porte électronique consiste à faire transiter chaque cellule biologique au travers d'un tout petit orifice. Cet orifice est parcouru par un courant constant dont l'intensité est modulée par la variation de résistance électrique induite par le transit de la particule dans le dit orifice. Ce signal est approximativement proportionnel au volume de la cellule. La porte électronique peut aussi être alimentée en courant alternatif conformément au document US 4, 791, 355.

Les analyseurs d'hématologie comportent également, un canal optique permettant de mesurer l'absorbance d'une particule passant dans la cuve de mesure.

Le but d'un analyseur en hématologie par exemple, est de compter les différentes cellules présentes dans un échantillon de sang, de différencier ces cellules et donc de pouvoir donner une proportion de chacune des classes cellulaires par rapport à l'ensemble de l'échantillon.

L'interprétation des mesures issues d'un compteur de globules fonctionnant sur sang total et permettant le comptage et la différentiation des populations cellulaires requiert, dans une grande majorité des cas, une représentation graphique sous forme de matrice en deux dimensions.

Dans cet objectif, les populations représentées sont identifiées selon deux paramètres physiques qui sont soit optique, soit électrique, soit les deux. Dans le cas précis de la matrice LMNE qui est la représentation standard des sous populations leucocytaires sur les appareils HORIBA ABX (5 diff), les deux mesures utilisées sont l'absorbance et la résistivité. Cette matrice est appelée LMNE car elle permet la différenciation et le comptage des Lymphocytes, Monocytes, Neutrophiles et Eosinophiles, qui sont les populations de globules blancs, ou leucocytes, normalement présents dans le sang.

Cette représentation permet de visualiser la majorité des populations de globules blancs, cependant cette visualisation graphique ne prend en compte que deux paramètres physiques obtenus sur l'analyseur.

Dans les nouvelles générations d'analyseurs, il est possible d'obtenir plus de paramètres physiques tels que, par exemple, la diffraction aux petits angles, notée FSC, la diffusion à 90°, notée SSC, une voie de fluorescence avec comme réactif le thiazole orange, notée FL1 et enfin la résistivité notée RES. On peut aussi envisager d'autres fluorescences avec comme réactif un anticorps marqué à l'aide d'un fluorochrome par exemple.

Actuellement, lorsque plus de deux variables sont mesurées par cellule ou particule, la visualisation sur un écran bidimensionnel est traditionnellement réalisée par la sélection de deux variables. Cela consiste donc à faire une projection orthogonale sur le plan de ces deux variables.

Néanmoins, selon les éléments observés et les mesures disponibles, ces projections orthogonales ne sont pas toujours adaptées à la visualisation et à la discrimination automatique des classes d'éléments.

Le brevet US 6, 630, 990 déposé par la société Abbott « Optical method and apparatus for red blood cell differentiation on a cell-by-cell basis, and simultaneous analysis of white blood cell differentiation » propose une projection des données sur un espace tridimensionnel et se base sur le modèle de Mie pour déterminer la concentration en hémoglobine, la maturité et la forme des globules rouges d'un échantillon.

Le brevet US 6, 944, 338 de la société Becton Dickinson & Co. « System for identifying clusters in scatter plots using smoothed polygons with optimal boundaries » génère des histogrammes bidimensionnels basés sur la densité pour discriminer des populations.

Le brevet US 6, 662, 117 de la société Sysmex Corp. « Particle analyzer and particle classifying method » décrit l'utilisation d'une matrice basée sur la variance et la covariance des caractéristiques des cellules à discriminer. Le traitement utilise des histogrammes bidimensionnels pour réaliser une classification.

La demande de brevet WO 2006/015056 de la société Dako Cytomation «ENHANCING FLOW CYTOMETRY DISCRIMINATION WITH GEOMETRIC TRANSFORMATION» décrit un tri de deux types de particules en temps réel grâce à un traitement linéaire des données. US 6524793, US 7369696, US 2008/172185 et FR 2733596 représentent d'autres exemples de classification cellulaires.

Aucun des documents cités ne décrit donc un procédé ou un dispositif apte à gérer un nombre élevé de données disponibles par cellule et apte à réaliser une classification automatique dans au moins trois classes cellulaires. Aucun des documents ne décrit non plus de traitement permettant d'obtenir une visualisation sur un seul écran de toutes les classes cellulaires présentes dans un échantillon, avec une différenciation et un comptage de ces cellules. Les procédés décrits ne permettent pas non plus d'isoler par exemple certaines cellules anormales d'une classe cellulaire particulière.

Objet et résumé de l'invention

La présente invention a donc pour but principal de pallier de tels inconvénients en proposant un procédé destiné à être utilisé dans un automate d'analyse de liquide biologique apte à détecter des cellules dans le liquide et à déterminer un n-uplet comprenant au moins quatre paramètres physiques (n>3) pour chaque cellule détectée, ledit procédé étant destiné à la classification par discrimination et au comptage dans au moins un ensemble des classes cellulaires et à leur représentation, classification et représentation étant avantageusement adaptées à la détection de signatures de pathologie(s), et comprenant les étapes suivantes :

a) stocker, préalablement, une pluralité de transformations mathématiques T d'une pluralité de n-uplets en m-uplets, m<n, chaque transformation, associée à une classification particulière des éléments n-uplets au sein d'un ensemble prédéterminé de classes cellulaires et déterminée en fonction de connaissances statistiques sur les cellules constituant ces classes cellulaires, permettant de placer les classes cellulaires d'un liquide biologique présentant les caractéristiques statistiques moyennes dans des zones distinctes de l'espace composite à m dimensions, la pluralité de transformations stockées autorisant avantageusement l'obtention de divers placements des classes cellulaires appropriés à des discriminations particulières utiles pour signer des pathologies ;

b) stocker, préalablement, une pluralité de filtres de discrimination et de reclassement en au moins deux classes cellulaires permettant, dans des espaces composites à m dimensions, de discriminer les m-uplets d'au moins deux classes cellulaires,

c) stocker, préalablement, pour l'affichage, au moins une transformation d'une pluralité de n-uplets en 3-uplets, en 2-uplets, ou encore en 1-uplets, déterminée en fonction de connaissances statistiques sur les cellules constituant les classes cellulaires d'un liquide biologique normal, permettant de placer les classes cellulaires d'un liquide biologique présentant les caractéristiques statistiques moyennes dans des zones distinctes de l'espace à 3 dimensions, ou de la surface à 2 dimensions, ou encore d'un axe à une dimension ;

d) recevoir une pluralité de n-uplets, résultats de l'analyse d'un liquide biologique ;

e) associer une première classification arbitraire aux n-uplets reçus ;

f) sélectionner un sous-ensemble des n-uplets en fonction de leurs classes ;

g) sélectionner et appliquer une transformation T en m-uplets aux n-uplets sélectionnés ;

h) sélectionner et appliquer un filtre de discrimination aux m-uplets , ce qui entraîne la mise à jour des classes des n-uplets ;

i) réitérer les étapes f), g) et h) en sélectionnant un sous-ensemble de n-uplets et/ou une transformation distincte de la précédente et/ou un filtre distinct du précédent, chaque itération définissant un pas d'un algorithme de discrimination, cet algorithme étant défini par la série des applications de transformations et de filtres, cette série étant avantageusement adaptée en fonction des signatures recherchées ;

j) sélectionner un sous-ensemble des n-uplets à afficher, en m-uplets, en fonction de leurs classes ;

k) appliquer un tag d'affichage particulier aux n-uplets en fonction de leur classe ;

l) appliquer une transformation en 3-uplets, en 2-uplets, ou encore en 1-uplets aux n-uplets sélectionnés ;

m) Afficher le résultat de la transformation en 3-uplets, 2- uplets, ou encore en 1-uplets sur un écran, ou sur tout autre support d'affichage, chaque classe cellulaire discriminée étant représentée par un nuage bidimensionnel, tridimensionnel, ou en une seule dimension dynamique de points portant des tags.

On entend par le terme « support d'affichage », un écran d'ordinateur, un support papier, ou tout autre moyen de représentation visuelle, qu'il soit partie intégrante du dispositif ou déporté.

On entend par le terme « tag » une couleur, un pictogramme ou tout autre élément graphique permettant de dissocier visuellement les n-uplets correspondants à des classes ou classes cellulaires distinctes. Par espace « 3D dynamique », on entend un espace 3D affiché sur un écran, donc sur deux dimensions, et qui pourra être mis en rotation de manière à être observé sous plusieurs angles sur cet écran.

L'itération des étapes f) à h) correspond à une séquence de plusieurs pas d'un algorithme dit « de classification », chacun de ces pas concernant un ensemble des classes considérées, et comprenant au moins une transformation qui définit un espace composite et un filtre de discrimination et de reclassement des éléments observés en au moins deux classes. Chaque pas d'algorithme, un pour chaque paire de classes cellulaires devant être discriminées met à jour la classe de chaque particule sélectionnée sous forme du n-uplet correspondant.

Le procédé selon l'invention offre un résultat plus précis de discrimination en intégrant l'ensemble des paramètres physiques mesurés sur l'analyseur, par exemple les paramètres suivants FSC, SSC, FL1, RES. En particulier, de façon traditionnelle, la compensation permet de retrancher dans l'intensité d'une fluorescence donnée, l'influence des autres fluorescences. Cela n'est traditionnellement utilisé que dans le cas de la fluorescence.

Le procédé selon l'invention permet de retirer ou d'ajouter des proportions de signal de manière algorithmique pour obtenir une meilleure discrimination des populations d'intérêt. En particulier, cette caractéristique peut être appliquée notamment, aux résultats des mesures morphologiques (SSC, FSC, RES...).

L'invention rend possible une représentation améliorée des sous populations de globules blancs sous la forme d'une matrice à deux dimensions. Outre la représentation en deux dimensions, l'invention identifie les cellules en fonction de leur maturation et de leurs caractéristiques physiques, noyau et cytoplasme, avec l'assurance que toutes les populations de cellules sont distinctes les unes des autres afin de pouvoir les classer dans les classes cellulaires et que les phénomènes de recouvrement sont faibles, en particulier en l'absence de pathologies. Cela autorise donc une interprétation aisée pour l'homme de l'art.

Avec le procédé selon l'invention, on fusionne les n variables d'entrée pour créer un espace composite à m dimensions. Dans cet espace, il est alors possible de réaliser des projections bidimensionnelles pertinentes pour ce que l'on veut montrer, éventuellement après avoir effectué des rotations pertinentes. Une zone d'intérêt peut ensuite être mise en forme, notamment par des fonctions de zoom et d'offset. L'espace composite et la mise en forme sont adaptés à la visualisation sur une projection ou à la discrimination automatique des classes d'éléments visées par la classification. La discrimination peut être réalisée par une recherche de pics ou de vallées sur un histogramme.

Le procédé selon l'invention a d'ores et déjà permis la mise au point d'algorithmes de classification automatique pour les leucocytes et a fourni des moyens de visualisation performants pour l'ensemble des classes leucocytaires ou certaines particularités cellulaires, par exemple en vue d'une détection de plusieurs sous-populations de lymphocytes.

L'invention utilise des statistiques sur les paramètres physiques des classes cellulaires concernées basées sur des matrices variance/covariance définies en amont. Les transformations stockées sont linéaires ou non linéaires.

Selon une caractéristique particulière de l'invention, les paramètres physiques sont des valeurs RES, FSC, FL1, SSC.

On entend par valeur, la hauteur maximale de l'impulsion sur le canal RES, FSC, FL1 ou SSC.

Selon une caractéristique avantageuse de l'invention, on applique une transformation fonctionnelle Tn->m, linéaire ou non-linéaire, qui consiste à transformer le vecteur de mesures de dimension n ($n \geq 3$) en un vecteur composite de dimension m < n par :

$$F: \quad R^n \to R^m$$

$$X \to Y \quad tq \; y_i = f_i(X), \quad 0 < i <= m$$

où x est le vecteur mesure initial de dimension n, autrement noté xi(X1...Xn) et y est le vecteur image qui représente l'élément yi(Y1...Ym) dans l'espace vectoriel composite normé de dimension m.

Avantageusement, les fonctions fi sont de la forme :

$$f_i(X) = (A_i.X + b_i) / (C_i.X + d_i)$$

où Ai (resp Ci) est la ième ligne de la matrice A (resp C) ayant m lignes et n colonnes et bi (resp di) est le ieme élément du vecteur B (resp D) de dimension m. La transformation est donc caractérisée par ces deux matrices A et C et ces deux vecteurs B et D. Si la matrice C est nulle et que tous les éléments de D sont non nuls, alors nous sommes dans un cas linéaire.

Cette caractéristique permet d'assurer une répartition des différentes classes cellulaires en des zones distinctes de l'espace composite dès lors que tous les facteurs dans les matrices A et C et dans les vecteurs B et D sont déterminés à l'aide de connaissances statistiques sur les classes cellulaires observées dans un liquide biologique normal.

Les transformations dans l'espace à m dimensions sont alors telles qu'en présence d'un sang normal, les nuages de points des différentes classes cellulaires sont localisés en des zones distinctes. On comprend donc bien que, dès lors qu'un liquide biologique aura une composition hors norme, par exemple lors de pathologie, la répartition en des zones distinctes et/ou bornées ne sera pas obtenue et le désordre biologique pourra être mis en évidence.

Selon une caractéristique particulière de l'invention, l'application d'une même transformation suivie de l'application d'un même filtre peut être répétée pour affiner la discrimination.

En particulier, une telle répétition est avantageusement réalisée suite à d'autres transformations distinctes qui auront permis une ou des discriminations selon d'autres critères que ceux de la dite transformation répétée.

Selon une caractéristique avantageuse de l'invention, la série de transformations utilisées est associée à une classification particulière d'un ensemble prédéterminé de classes cellulaires révélatrices d'une pathologie, cette série étant déterminée en fonction de connaissances statistiques sur les cellules constituant ces classes cellulaires, permettant de placer les classes cellulaires d'un liquide biologique présentant les caractéristiques statistiques moyennes de la pathologie dans des zones distinctes de l'espace composite à m dimensions, la transformation de pathologie permettant de dissocier un liquide biologique normal d'un liquide biologique présentant une pathologie particulière.

Selon une autre caractéristique particulière de l'invention, la série des transformations utilisées dans les étapes f) et g) et la transformation, dans l'espace bi ou tri dimensionnel, est telle que les classes cellulaires sont classées par degré de maturité.

Cela permet d'un coup d'oeil sur l'écran de repérer la présence de dégradation anormale de cellules ou d'anormalité dans la maturité des cellules présentes dans le liquide biologique.

L'invention concerne également un dispositif de classification par discrimination et comptage d'au moins un ensemble de trois classes cellulaires destiné à être relié à un automate d'analyse de liquide biologique apte à détecter des cellules dans le liquide et apte à déterminer un n-uplet comprenant au moins quatre paramètres physiques (n>3) pour chaque cellule détectée, ledit dispositif comprenant :

- une mémoire pour stocker :

  - une pluralité de transformations mathématiques T d'une pluralité de n-uplets en m-uplets, m<n, chaque transformation, associée à une classification particulière d'un ensemble prédéterminé de classes cellulaires et déterminée en fonction de connaissances statistiques sur les cellules constituant ces classes cellulaires, permettant de placer les classes cellulaires d'un liquide biologique présentant les caractéristiques statistiques moyennes dans des zones distinctes de l'espace composite à m dimensions;
  - une pluralité de filtres de discrimination permettant, dans des espaces composites à m dimensions, de discriminer les m-uplets de chaque classe cellulaire de l'ensemble prédéterminé,
  - au moins une transformation d'une pluralité de n-uplets en 3-uplets, en 2-uplets, ou encore en 1-uplets, déterminée en fonction de connaissances statistiques sur les cellules constituant les classes cellulaires d'un liquide biologique normal, permettant de placer les classes cellulaires d'un liquide biologique présentant les caractéristiques statistiques moyennes dans des zones distinctes de l'espace à 3 dimensions, ou de la surface à 2 dimensions, ou encore d'un axe à une dimension ;

- des moyens de réception d'une pluralité de n-uplets résultats de l'analyse d'un liquide biologique ;
- des moyens pour associer une première classification arbitraire à chaque n-uplet,
- des moyens pour sélectionner un sous-ensemble des n-uplets en fonction de leurs classes ;
- des moyens de sélection d'au moins une transformation T parmi la pluralité de transformations et au moins un filtre de discrimination parmi la pluralité des filtres de discrimination ;
- des moyens de traitement de données pour appliquer au moins la transformation T sélectionnée et le filtre de discrimination aux n-uplets sélectionnés ;
- des moyens de traitement de données pour associer un tag particulier aux m-uplets selon leur classe ;
- des moyens de traitement de données pour appliquer la transformation de la pluralité de n-uplets en 3-uplets, 2-uplets, ou 1-uplets ;
- des moyens pour afficher le résultat de la transformation en 3-uplets, 2-uplets, ou 1-uplets sur un écran.

Selon une implémentation préférée, les différentes étapes du procédé selon l'invention sont déterminées par des instructions de programmes d'ordinateurs.

En conséquence, l'invention vise aussi un programme d'ordinateur sur un support d'informations, ce programme étant susceptible d'être mis en oeuvre dans un ordinateur, un moyen de traitement de type matériel, tel un FPGA (« field programmable gate array » en anglais) ou tout autre type d'électronique programmable, ce programme comportant des instructions adaptées à la mise en oeuvre des étapes du procédé selon l'invention.

Ce programme peut utiliser n'importe quel langage de programmation, et être sous la forme de code source, code machine, ou de code intermédiaire entre code source et code machine, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD, ou un DVD qu'ils soient réinscriptibles ou non, ... ou une ROM de circuit microélectronique, ou encore un moyen d'enregistrement magnétique, par exemple une disquette (floppy disc), un disque dur, une mémoire non volatile (mémoire flash par exemple telle qu'une clé USB etc).

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente schématiquement un dispositif selon l'invention ;
- les figures 2a à 2c montrent des résultats obtenus par le procédé selon l'invention pour un sang normal ;
- la figure 3 montre sous forme de blocs les positions attendues des populations de la figure 2b ;
- les figures 4a à 4j montrent des résultats obtenus par le procédé selon l'invention pour un sang normal (5a) et des sangs pathologiques (5b à 5j).

Description détaillée d'un mode de réalisation

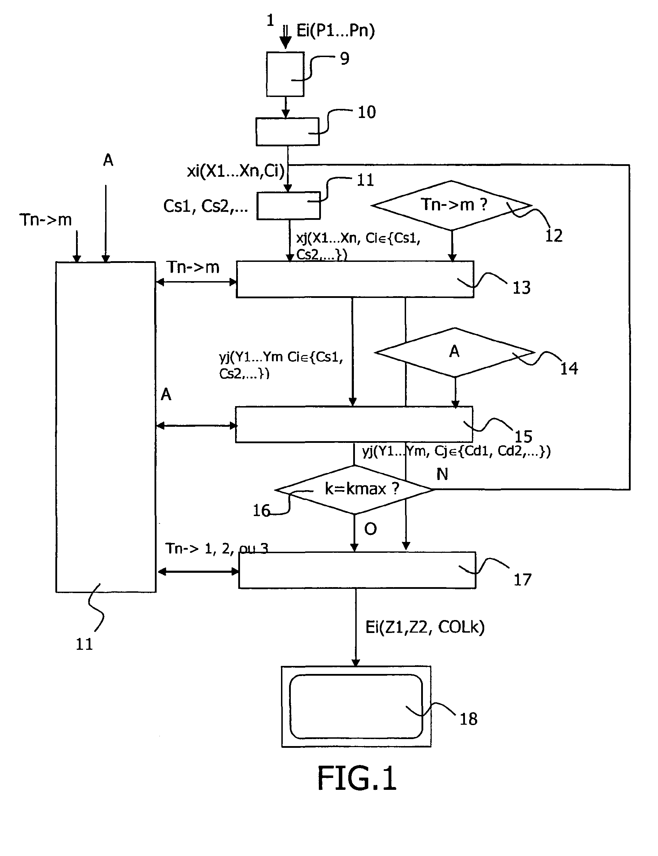

La figure 1 illustre schématiquement un dispositif pour mettre en oeuvre l'invention. Ce dispositif comprend des moyens de réception 9 pour recevoir des données en provenance d'un analyseur de liquide biologique 1 permettant de déterminer n paramètres physiques X1 à Xn, n>3, par cellule xi détectée. Ces n paramètres définissent un n-uplet ou vecteur mesure xi(X1...Xn).

Cet analyseur est avantageusement un cytomètre de flux et fournit, par exemple, au moins les quatre paramètres que sont la diffraction aux petits angles, notée X1=FSC dans la suite, la diffusion à 90°, notée X2=SSC, au moins une voie de fluorescence, notée X3=FL1, et la résistivité, notée X4=RES. Dans l'exemple particulier décrit, le Thiazole Orange qui se lie aux acides nucléiques intracellulaires, permettant ainsi de mettre en évidence les cellules nucléées, en particulier ici, les globules blancs, est utilisé.

Au sein de moyens d'attribution arbitraire de classe 10, la connaissance de ces paramètres permet d'attribuer une classe arbitraire à chacun des n-uplets. Néanmoins, dans la suite, comme les transformations utilisées ne modifient pas la classe Ci associée à chaque n-uplet, on parlera de transformations d'un espace de n dimensions vers un espace de m dimensions et on continuera à parler de n-uplets.

Dans l'exemple décrit, le dispositif comprend des moyens de sélection 11 d'un groupe de n-uplets appartenant à un sous-ensemble de classes dites d'entrée utilisées dans le pas Csi.

Le dispositif comprend une mémoire 18 dans laquelle sont stockés des éléments logiciels permettant des transformations T de l'ensemble de données reçu xi(X1...Xn,Csi) vers des espaces présentant un nombre de dimensions strictement inférieur à n et, dans l'exemple proposé, la mise en oeuvre de filtres A de discrimination de sous-ensembles de classes cellulaires de sortie affectées dans le pas Cdi.

Le dispositif comprend encore des moyens de sélection 12 d'une transformation Tn->m d'une constellation des données dans l'espace à n dimensions en une constellation dans un espace à m dimensions. Selon l'invention, chaque transformation peut-être associée à une ou plusieurs classifications particulières d'un ensemble prédéterminé de classes cellulaires et déterminée en fonction de connaissances statistiques sur les cellules constituant les populations cellulaires correspondant à ces classes cellulaires.

On entend par classification particulière tout ensemble de classes cellulaires au sein desquelles on voudra classifier les cellules détectées. En fonction de l'objectif de l'analyse, ces classifications sont différentes.

En effet, lors d'une simple analyse de sang, le premier objectif est de savoir si le sang analysé présente une composition dans les fourchettes de la normalité. L'invention permet d'accéder à cette information en assurant une dissociation des classes cellulaires à discriminer dans le cas d'un sang normal et elle permet aussi sa visualisation lors d'un affichage sur un écran.

Un autre objectif sera de confirmer la typicité d'un sang pathologique. Les éléments typiques d'un tel sang pour une pathologie particulière étant connus par ailleurs de manière statistique, la transformation associée Tn->m permettra de dissocier les classes cellulaires correspondantes lors d'un affichage sur un écran. De plus, les calculs obtenus permettront de donner le résultat sur l'état pathologique du sang étudié.

Chaque transformation permet ainsi de placer les classes cellulaires de la classification particulière recherchée d'un liquide biologique présentant des caractéristiques statistiques moyennes dans des zones distinctes de l'espace composite à m dimensions.

Des moyens de traitement 13 mettent en oeuvre la transformation Tn->m sélectionnée sur l'ensemble de données xi(X1...Xn) afin de produire un ensemble de données yi(Y1...Ym) dans un espace à m dimensions.

Cette transformation fonctionnelle Tn->m, linéaire ou non-linéaire, consiste à transformer le vecteur de mesures de dimension n (n > 3) en un vecteur composite de dimension m < n par une transformation fonctionnelle :

$$F: \quad R^n \rightarrow R^m$$

$$x \rightarrow y \quad tq \; y_i = f_i(X1...Xn), \quad 0 < i <= m$$

où x est le vecteur mesure initial de dimension n, autrement noté xi(X1...Xn) et y est le vecteur image qui représente l'élément yi(Y1...Ym) dans l'espace vectoriel composite normé de dimension m.

Avantageusement, les fonctions fi sont de la forme :

$$f_i(x) = (A_i.x + b_i) / (C_i.x + d_i)$$

où Ai (resp Ci) est la ieme ligne de la matrice A (resp C) ayant m lignes et n colonnes et bi (resp di) est le ieme élément du vecteur B (resp D) de dimension m.

La transformation est donc caractérisée par les deux matrices A et C et les deux vecteurs B et D. Si la matrice C est nulle et que tous les éléments de D sont non nuls, alors nous sommes dans un cas linéaire.

D'autres types de transformations stockées permettent avantageusement de multiplier deux paramètres associés à la même cellule, le but étant de réduire le nombre m de dimensions de l'espace composite au minimum nécessaire selon l'objectif visé.

Les classes cellulaires dont on souhaite la discrimination sont alors placées dans l'espace à m dimensions sous la forme d'une pluralité de constellations dissociées les unes des autres.

Des moyens de sélection 14 des filtres de discrimination permettent alors de sélectionner le filtre A pour le pas en cours. Il est entendu que chaque pas est défini par un filtre de sélection - un sous-ensemble de classes -, une transformation, et un filtre de discrimination qui va reclasser dans un sous-ensemble de classes les m-uplets dans l'espace composite. La sélection peut être manuelle, réalisée par un utilisateur, ou préprogrammée et donc automatique. Au sein de moyens de traitement 15, ces filtres A sont alors utilisés pour l'observation des constellations permettant la meilleure des discriminations entre les cellules de plusieurs populations distinctes. Un certain nombre de discriminations de cellules est alors réalisé dans l'espace à m dimensions. Le choix du filtre est associé, pour chaque pas, au choix de la transformation Tn->m qui a été réalisée précédemment. Un ou plusieurs filtres peuvent être utilisés avec la même transformation. De manière similaire, le même filtre peut être mis en oeuvre après deux transformations distinctes.

Les mêmes filtres et transformations peuvent aussi agir sur des sous-ensembles de n-uplets sélectionnés distincts.

L'ensemble formé par la sélection d'un sous-ensemble de n-uplets (ou n+1 uplets puisqu'une classe est associée au n-uplet proprement dit), la sélection et l'application d'une transformation et la sélection et l'application d'un ou plusieurs filtre(s) constitue un pas de l'algorithme de discrimination utilisé selon l'invention. L'ensemble des pas mettant chacun en oeuvre une sélection de n-uplets, une transformation et au moins un filtre constitue l'algorithme de discrimination proprement dit à l'issue duquel toutes les cellules sont associées à une des classes que l'on souhaite discriminer.

Avantageusement, un principe de répétition des pas de correction de populations peut-être mis en oeuvre. Une première classification initiale est effectuée par un processus de sélection de zones prédéfinies.

Dans un exemple illustratif, chaque pas utilise une transformation de chaque vecteur mesure vers un espace de dimension m=1, chaque vecteur mesure est alors réduit à une seule valeur. Un filtre de discrimination vers un sous-ensemble de classes est ensuite appliqué. Seuls les vecteurs ayant une classification initiale appartenant au sous-ensemble de vecteurs sélectionnés sont considérés.

Avantageusement, les frontières de séparation, ou de reclassement sont préalablement fixées, donc stockée ou déterminées à l'aide d'histogrammes selon des critères préalablement établis et statistiques.

Selon les pas, on utilise des transformations, des filtres et des classes résultats adaptés, l'ensemble de ces opérations définissant un algorithme de discrimination au sens de l'invention.

Un module de contrôle 16 vérifié à l'issue de l'application du pas d'algorithme en cours si la totalité des pas prévus ont été réalisés. Si ce n'est pas le cas, un autre pas d'algorithme est réalisé. Si c'est le cas alors l'ensemble des n-uplets est envoyé vers des moyens de traitement 17.

La classification réalisée par les discriminations associe une distinction graphique COLk différente à chaque classe cellulaire Ck devant être discriminée, par exemple une couleur de point ou une forme de point. On obtient ainsi un ensemble de points yi(Y1...Ym,COLk) dans l'espace à m dimensions auxquels il correspond un ensemble de points xi(X1...Xn,COLk) dans l'espace à n dimensions.

Enfin, ces moyens de traitement 17 appliquent une transformation Tn->1, Tn->2 ou Tn->3 à l'ensemble de points xi(X1...Xn,COLk) en un ensemble de vecteurs composites Ei(Z1,Z2,COLk) dans un espace bidimensionnel ou tridimensionnel. Le résultat est alors une répartition des classes cellulaires dans des constellations planes ou tridimensionnelles colorées. La transformation Tn->1, Tn->2 ou Tn->3 est telle que, dans le cas où le liquide biologique présente les caractéristiques moyennes d'un sang normal, les nuages de points ne présentent pas ou peu de recouvrement lorsque les points Ei(Z1,Z2,COLk) sont affichés sur des moyens d'affichage 19 soit de manière plane, en particulier, dans le cas d'une dimension, on peut ajouter la densité du canal pour représenter l'histogramme, soit avec un espace 3D dynamique. Cela n'est pas le cas des projections bidimensionnelles orthogonales généralement utilisées.

Cet affichage en deux dimensions sur un écran permettra à l'utilisateur d'obtenir une information très rapidement puisque la transformation dans un espace à m dimensions puis la transformation vers un espace bidimensionnel auront été sélectionnées par rapport à la question à laquelle on voulait répondre : par exemple, est-ce un sang normal ? est-ce un sang révélateur de telle pathologie ? etc.

Un point essentiel de l'invention est que la pluralité de transformations stockées selon l'invention dans une mémoire du dispositif selon l'invention autorise l'obtention de matrices plus appropriée à chaque question envisagée.

Avec l'invention, en général, trois étapes sont nécessaires afin d'obtenir une représentation en deux dimensions de quatre paramètres physiques X1, X2, X3, X4 selon l'invention.

Outre l'association préalable d'une classe arbitraire, la première étape 1 consiste à appliquer une transformation des données X1, X2, X3, X4 mesurées constituant le n-uplet associé à chaque cellule afin d'obtenir pour chaque cellule des coordonnées Y1, Y2 et Y3 fonction des valeurs mesurées de X1, X2, X3 et X4 et de trois constantes dépendantes de la calibration des bancs de mesures et du système d'acquisition.

Ensuite, dans une deuxième étape 2, un filtre est appliqué et on va sélectionner le sous-ensemble des points appartenant aux classes qui seront affichées.

La troisième étape consiste à appliquer une transformation des n-uplets vers un espace uni, bi ou tri dimensionnel, ici bidimensionnel pour affichage. Pour chacun de ces points alors notés Ei, deux coordonnées Z1 et Z2 sont alors associées à chaque cellule avec, par exemple, une couleur COLk correspondant à la classe Ck déterminée grâce à la classification.

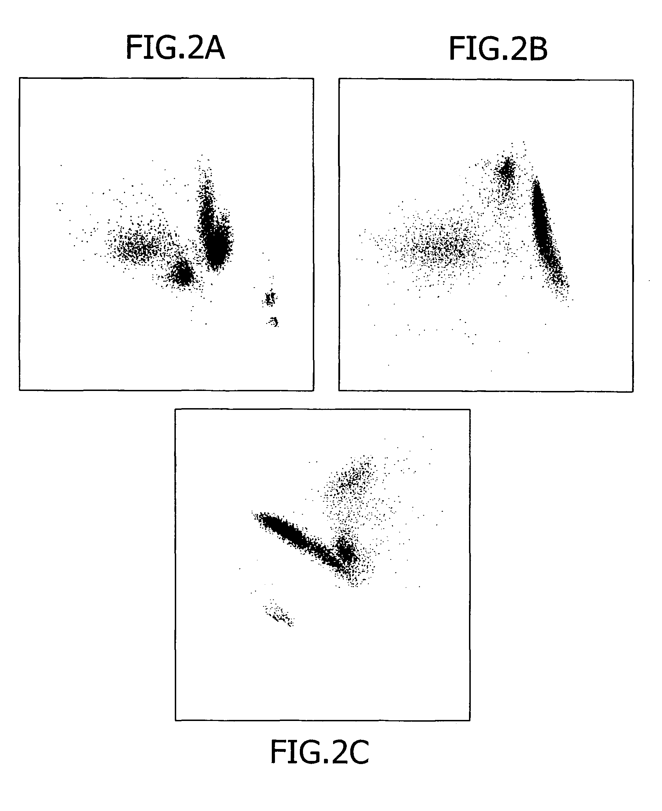

La figure 2 représente trois exemples de résultats de telles transformations vers un espace bidimensionnel permettant une visualisation spécifique des classes cellulaires en fonction des besoins d'analyse. La figure 2A est l'une de ces représentations, elle sera décrite dans la suite. La figure 2B correspond à une autre transformation permettant une visualisation privilégiée des états de maturations de lignées cellulaires, elle sera également décrite par la suite. La figure 2C permet une visualisation privilégiée de pathologies de la lignée lymphoïde, en particulier la leucémie lymphoïde chronique (LLC).

Dans une réalisation de l'invention, les transformations disponibles sont avantageusement utilisées successivement sur un même ensemble de points xi(X1...Xn).

Ainsi une première transformation peut permettre de répondre à une question de base : est-ce que le sang est normal ou non ?

Si l'utilisateur observe que les nuages de points ne sont pas dissociés, il peut penser à un problème technique ou à une pathologie. Il a aussi accès en parallèle à un décompte des cellules de chaque classe cellulaire, ainsi qu'à leur proportion relative.

De plus, même si les classes cellulaires, par exemple marquées de couleurs différentes, se chevauchent dans la représentation finale obtenue, il est possible de conclure sur le sang. En effet, la classification a été réalisée au moyen de différentes transformations, dans des espaces qui ne sont pas ceux affichés en 2D. La séparation peut donc être exacte même si les populations cellulaires se projettent l'une sur l'autre dans le plan de visualisation.

Il est intéressant de noter qu'il est possible de pouvoir choisir de masquer certaines classes cellulaires sans intérêt pour l'analyse, afin de simplifier l'affichage, ou de mettre en évidence certaines caractéristiques particulières.

Dans ce cas, ou si les valeurs de proportion ou de comptage sont hors normalité, ou si une alarme particulière a été déclenchée par l'algorithme précédent, le procédé peut être recommencé avec une transformation associée à une classification particulière correspondant par exemple à une pathologie particulière ou à un âge particulier du patient.

La nouvelle transformation génère un ensemble de points dans un espace à m dimensions qui peut être semblable ou différent de celui utile pour la première transformation utilisée. Dans cette transformation correspondant à une classification particulière, les populations de cellules à regarder de façon plus précise sont similaires ou, plus généralement, différentes de celles dont on visait la classification lors de la première transformation.

Les transformations incluent des calculs linéaires et/ou non linéaires qui permettent d'obtenir la meilleure représentation possible des résultats selon un angle favorable pour l'accès à l'information recherchée. Cet angle est associé à la pathologie à mettre en évidence à partir des données brutes recueillies.

L'invention permet aussi de mettre en oeuvre des moyens d'exploration interactive.

Ainsi que présenté ci-avant, une transformation vers un espace composite de dimension m=3 est utilisée. La transformation Tn->m et le sous-ensemble filtre sont adaptés à l'observation, par exemple d'une lignée cellulaire, d'une famille de pathologies ou autre.

Des éléments de géométrie classique 3D dont les rotations, les affinités, etc peuvent alors être mises en oeuvre en tant que transformations secondaires pour observer par projection sur des sous-variétés des anomalies et/ou reclassifier les vecteurs mesures. Si la transformation Tn->m est linéaire, il est facile d'agréger ces transformations secondaires avec la transformation primaire Tn>m pour donner une nouvelle transformation T'.

Dans ce mode de réalisation, quatre mesures physiques sont donc obtenues sur un analyseur de sang sous forme de quatre grandeurs physiques : X1, X2, X3, X4 correspondant respectivement à la diffraction aux petits angles, à la diffusion à 90°, à une voie de fluorescence avec comme réactif le thiazole orange et la résistivité.

Un exemple d'une telle transformation, celle représentée sur la figure 2A, permet de passer d'un espace de mesure 4D, dont les mesures disponibles pour chaque cellule sont les paramètres X1, X2, X3 et X4 vers un espace composite 2D est défini par les équations suivantes :

$$y1 = C11.X1 + C12.X2 + C13.X3 + C14.X4 + C15$$

$$y2 = C21.X1 + C22.X2 + C23.X3 + C24.X4 + C25$$

Cette transformation permet la visualisation de toutes les populations d'un sang normal et la détection de nombreuses pathologies de la lignée lymphoïde. Les constantes C1i et C2i sont définies en fonction des caractéristiques de l'analyseur, en particulier celles du banc optique.

Par exemple, C11=0.1431, C12=0.1496, C13=- 0.8895, C14=- 0.1261, C15=4155, C21=-0.3713, C22=0.0279, C23=- 0.0877, C24=0.7925 et C25=682.8.

La figure 5 représente, sous la forme de surfaces bidimensionnelle, les différentes populations observées dans un sang de type normal et dans des sangs pathologiques avec la transformation telle qu'exposée ci-avant.

L'invention rend possible la visualisation de cinq populations leucocytaires, comprenant les basophiles. Les types de représentations présentés sur ces figures sont des exemples pour donner une idée de la disposition des différentes populations leucocytaires selon l'invention en fonction d'échantillons de sang pathologiques ou pas.

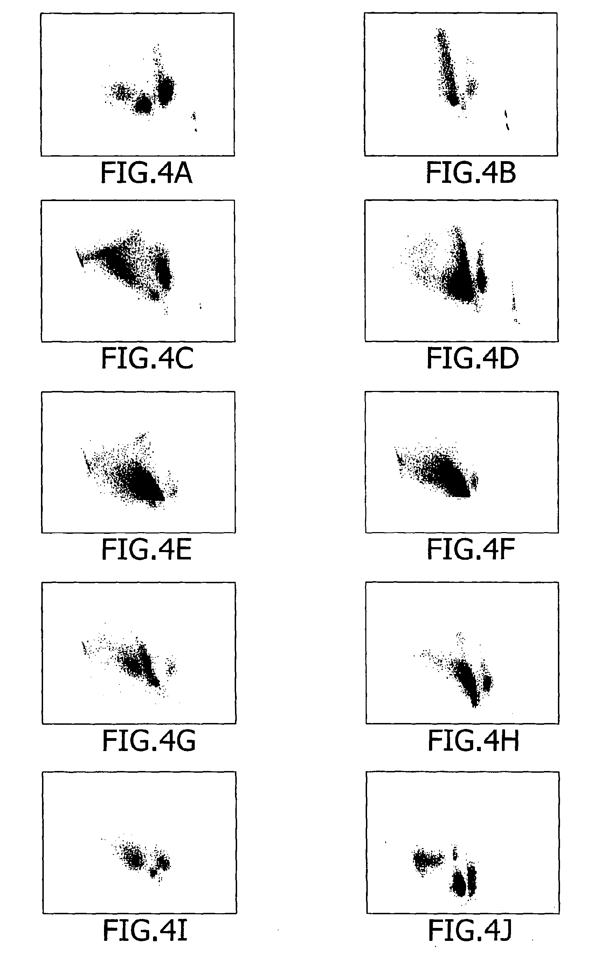

La figure 4A correspond à un sang normal. La figure 4B correspond à un sang signant une leucémie à tricholeucocytes. La figure 4C correspond à un sang signant un myélome. La figure 4D correspond à un sang signant un syndrome de Sezary. Les figures 4E et 4F correspondent à des sangs signant une leucémie à leucocytes de type LAL (Leucémie Lymphoïde Aiguë) B2. La figure 4G correspond à un sang signant une leucémie LAL Burkitt/LAL B3. La figure 4H correspond à un sang signant une leucémie LAL T. La figure 4I correspond à un sang signant une leucémie LAM (Leucémie Myeloïde Aiguë). La figure 4J correspond à un sang signant une pathologie LLC (Leucémie Lymphoïde Chronique).

Dans un autre exemple, le résultat d'une telle transformation sera alors une représentation telle que celle représentée en figure 2B.

Dans l'exemple proposé, les valeurs des facteurs sont alors :

$$A = \begin{pmatrix} -1551 & 0 & 0 & 0 \\ 0 & -100 & 0 & 0 \\ -100 & 0 & 0 & 0 \end{pmatrix}$$

$$B = \begin{pmatrix} 6351345 \\ 409500 \\ 409500 \end{pmatrix}$$

$$C = \begin{pmatrix} 0 & 0 & 1 & 0 \\ 0 & 0 & 0 & 1 \\ 0 & 1 & 0 & 0 \end{pmatrix}$$

$$D = \begin{pmatrix} 1 \\ 1 \\ 1 \end{pmatrix}$$

La deuxième étape 2 consiste en une transformation graphique contenant une translation et une matrice de rotation (matrice d'Euler) tel que les angles de rotation dans notre cas sont 130°, 51° et 209° autour d'un centre situé à (2048, 2048, 2048).

On obtient alors les équations suivantes :

$$Y'1 = [0.1161*(Y1-2048)-0.91899*(Y2-2048)-0.37677(Y3-2048)] + 2048$$

$$Y'2 = [-0.92118*(Y1-2048)-0.24152*(Y2-2048)+0.30510(Y3-2048)] + 2048$$

$$Y'3 = [-0.37138*(Y1-2048)+0.31163*(Y2-2048)-0.87461(Y3-2048)] + 2048$$

La troisième étape 3 consiste à une adaptation graphique afin d'optimiser la visualisation des familles de cellules dans un graphique 4096 X 4096 tel que :

$$Y''1 = Y'1*3-10500$$

$$Y''2 = Y'2$$

En définitive, les équations finales dans lesquelles l'ensemble des étapes sont intégrées sont alors :

$$Y''1 = 540.6*(4095 - X1)/(1+ X3) - 275.7*(4095 - X2)/(1+ X4) - 113.04*(4095 - X1)/(1+ X2) +2892 ;$$

Et

$$Y''2 = -1429*(4095 - X1)/(1+ X3) - 24.15*(4095 - X2)/(1+ X4) + 30.51*(4095 - X1)/(1+ X2) +3805.$$

Pour une représentation sur X et Y compris entre 0 et 4095, on peut ajouter la saturation aux limites :

Si X < 0 alors X = 0
Si X > 4095 alors X = 4095
Si Y < 0 alors Y = 0
Si Y > 4095 alors Y = 4095

La représentation des classes cellulaires obtenue dans cette forme de matrice permet de voir en une seule fois l'ensemble des sous populations leucocytaires présentes dans l'échantillon de sang total. Les sous populations sont visibles et bien séparées et il y a peu de recouvrement entre les différentes populations sauf dans le cas de sang anormaux. Sur la représentation obtenue sur la Figure 2B, les abscisses et les ordonnées n'ont pas un sens concret. En revanche, la disposition des populations sur la matrice est importante.

Avec l'équation présentée ci-dessus, les positions sur l'espace bidimensionnel des classes cellulaires sont ordonnées le long de la verticale (ordonnées) en commençant par les cellules les plus immatures suivies des cellules matures et ensuite se décomposant dans le sens horizontal (abscisses)entre les cellules ayant une structure mono-nucléée et celles ayant une structure poly-nucléée.

Cette représentation se rapproche de la vision schématique de l'arbre de classification des cellules du sang à partir des cellules souches. Elle permet une interprétation plus aisée et plus directe des différentes sous populations leucocytaires par le praticien ou le biologiste.

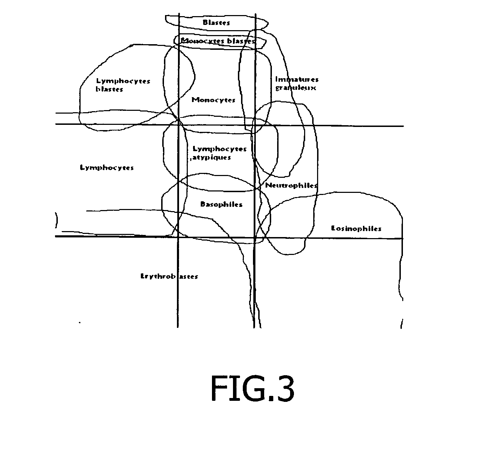

La figure 3 représente schématiquement des zones distinctes dans lesquelles il est possible de placer les différentes populations de leucocytes que l'on peut supposer trouver dans la matrice bidimensionnelle décrite ci-dessus. La présence ou non des populations sur l'écran dépend des sangs analysés, normaux ou anormaux/pathologiques.

On remarque enfin que diverses mises en oeuvre peuvent être réalisées selon les principes de l'invention. Notamment, différentes formes de représentation des populations leucocytaires sous la forme d'ensembles de constellations sont accessibles selon l'invention.

**Revendications**

1. Procédé destiné à être utilisé dans un automate d'analyse de liquide biologique apte à détecter des cellules dans le liquide et à déterminer un n-uplet (xi(X1...Xn,Ci)) comprenant au moins quatre paramètres physiques (n>3) mesurés pour chaque cellule détectée, ledit procédé étant destiné à la classification par discrimination et au comptage dans un ensemble d'au moins trois classes cellulaires (Ci) et à leur représentation et comprenant les étapes suivantes :

   a) stocker, préalablement, une pluralité de transformations mathématiques (Tn->m) d'une pluralité de n-uplets en m-uplets (yj(Y1...Ym, Cj)), m<n, chaque transformation, associée à une classification particulière des éléments n-uplets au sein d'un ensemble prédéterminé de classes cellulaires (Cdi) et déterminée en fonction de connaissances statistiques sur les cellules constituant ces classes cellulaires, permettant de placer les classes cellulaires (Cdi) d'un liquide biologique présentant les caractéristiques statistiques moyennes dans des zones distinctes de l'espace composite à m dimensions ;

b) stocker, préalablement, une pluralité de filtres de discrimination et de reclassement (A) en au moins deux classes cellulaires (Cd1, Cd2) permettant, dans des espaces composites à m dimensions, de discriminer les m-uplets d'au moins deux classes cellulaires,

c) stocker, préalablement, pour l'affichage, au moins une transformation (T->1,2,3) d'une pluralité de n-uplets (xi(X1...Xn,Ci)) en 3-uplets, 2-uplets, ou 1-uplets, déterminée en fonction de connaissances statistiques sur les cellules constituant les classes cellulaires d'un liquide biologique normal, permettant de placer les classes cellulaires (Cdi) d'un liquide biologique présentant les caractéristiques statistiques moyennes dans des zones distinctes de l'espace à 3 dimensions, de la surface à 2 dimensions, ou de l'axe à une dimension ;

d) recevoir une pluralité de n-uplets (xi(X1...Xn,Ci)), résultats de l'analyse d'un liquide biologique ;

e) associer une première classification arbitraire (Csi) aux n-uplets reçus ;

f) sélectionner un sous-ensemble des n-uplets en fonction de leurs classes (Csi) ;

g) sélectionner et appliquer une transformation (Tn->m) en m-uplets aux n-uplets sélectionnés ;

h) sélectionner et appliquer un filtre de discrimination (A) aux m-uplets, ce qui entraîne la mise à jour des classes (Cdi) des n-uplets ;

i) réitérer les étapes f), g) et h) en sélectionnant un sous-ensemble de n-uplets (Csi) et/ou une transformation distincte de la précédente et/ou un filtre distinct du précédent, chaque itération définissant un pas d'un algorithme de discrimination, cet algorithme étant défini par la série des applications de transformations et de filtres ;

j) sélectionner un sous-ensemble des n-uplets à afficher, en m-uplets, en fonction de leurs classes ;

k) appliquer un tag d'affichage particulier (COLk) aux n-uplets en fonction de leur classe (Ck) ;

l) appliquer une transformation en 3-uplets ou 2-uplets aux n-uplets, ou encore en 1-uplets (Tn-> 1,2,3) aux n-uplets sélectionnés ;

m) Afficher le résultat de la transformation en 3-uplets ou 2-uplets sur un écran (18), ou tout autre support d'affichage, chaque classe cellulaire discriminée étant représentée par un nuage bidimensionnel ou tridimensionnel dynamique de points portant des tags.

2. Procédé selon l'une des revendications précédentes, **caractérisé en ce que** les paramètres physiques sont RES, FSC, FL1, SSC.

3. Procédé selon la revendication 2, **caractérisé en ce que** la transformation de n-uplets en 2-uplets associe à chaque cellule un vecteur composite de la forme Y1=C11.FSC + C12.SSC + C13.FL1 + C14.RES + C15 et Y2 = C21.FSC + C22.SSC + C23.FL1 + C24.RES + C25.

4. Procédé selon l'une des revendications précédentes, **caractérisé en ce qu'**au moins certains pas de l'algorithme de discrimination sont répétés pour affiner la discrimination.

5. Procédé selon l'une des revendications précédentes, **caractérisé en ce qu'**il comprend une étape de stockage d'une transformation dite de pathologie d'une pluralité de n-uplets en m-uplets, m<n, associée à une classification particulière d'un ensemble prédéterminé de classes cellulaires révélatrices de la pathologie et déterminée en fonction de connaissances statistiques sur les cellules constituant ces classes cellulaires, permettant de placer les classes cellulaires d'un liquide biologique présentant les caractéristiques statistiques moyennes de la pathologie dans des zones distinctes de l'espace composite à m dimensions, la transformation de pathologie permettant de dissocier un liquide biologique normal d'un liquide biologique présentant une pathologie particulière.

6. Procédé selon l'une des revendications précédentes, **caractérisé en ce que** la transformation des n-uplets en 2-uplets permet de placer les classes cellulaires d'un liquide biologique présentant les caractéristiques statistiques moyennes de la pathologie dans des zones distinctes de l'espace composite à 2 dimensions.

7. Procédé selon l'une des revendications précédentes, **caractérisé en ce que** la transformation vers un espace bidimensionnel est telle que les classes cellulaires sont classées par degré de maturité.

8. Procédé selon l'une des revendications 1 à 5, **caractérisé en ce que** la transformation des n-uplets en 3-uplets permet de placer les classes cellulaires d'un liquide biologique présentant les caractéristiques statistiques moyennes de la pathologie dans des zones distinctes d'un espace composite à 3 dimensions dynamique à l'affichage.

9. Dispositif de classification par discrimination et comptage dans un ensemble d'au moins trois classes cellulaires destiné à être relié à un automate d'analyse de liquide biologique apte à détecter des cellules dans le liquide et apte à déterminer un n-uplet comprenant au moins quatre paramètres physiques (n>3) pour chaque cellule détectée, ledit dispositif comprenant :

- une mémoire pour stocker :

- une pluralité de transformations mathématiques d'une pluralité de n-uplets en m-uplets, m<n, chaque transformation, associée à une classification particulière d'un ensemble prédéterminé de classes cellulaires et déterminée en fonction de connaissances statistiques sur les cellules constituant ces classes cellulaires, permettant de placer les classes cellulaires d'un liquide biologique présentant les caractéristiques statistiques moyennes dans des zones distinctes de l'espace composite à m dimensions;
- une pluralité de filtres de discrimination et de reclassement en au moins deux classes cellulaires permettant, dans des espaces composites à m dimensions, de discriminer les m-uplets d'au moins deux classes cellulaires,
- pour l'affichage, au moins une transformation d'une pluralité de n-uplets en 3-uplets, 2-uplets, ou 1-uplets, déterminée en fonction de connaissances statistiques sur les cellules constituant les classes cellulaires d'un liquide biologique normal, permettant de placer les classes cellulaires d'un liquide biologique présentant les caractéristiques statistiques moyennes dans des zones distinctes de l'espace à 3 dimensions, de la surface à 2 dimensions, ou de l'axe à une dimension ;

- des moyens de réception d'une pluralité de n-uplets résultats de l'analyse d'un liquide biologique ;
- des moyens pour associer une première classification arbitraire à chaque n-uplet,
- des moyens pour sélectionner un sous-ensemble des n-uplets en fonction de leurs classes ;
- des moyens de sélection d'au moins une transformation parmi la pluralité de transformations et d'au moins un filtre de discrimination parmi la pluralité des filtres de discrimination ;
- des moyens de traitement de données pour appliquer au moins la transformation sélectionnée et le filtre de discrimination aux n-uplets sélectionnés et réitérer ces applications ;
- des moyens de sélection d'un sous-ensemble des n-uplets à afficher, en m-uplets, en fonction de leurs classes
- des moyens de traitement de données pour associer un tag particulier aux m-uplets selon leur classe ;
- des moyens de traitement de données pour appliquer la transformation de la pluralité de n-uplets en 3-uplets, 2-uplets, ou 1-uplets ;
- des moyens pour afficher le résultat de la transformation en 3-uplets, 2-uplets, ou 1-uplets sur un écran.

10. Programme d'ordinateur destiné à être mis en oeuvre par un ordinateur, un moyen de traitement de type matériel, tel un field programmable gate array, ou tout autre type d'électronique programmable, comportant des instructions pour l'exécution des étapes du procédé selon l'une quelconque des revendications 1 à 8 lorsque ledit programme est exécuté par un ordinateur.

11. Support d'enregistrement lisible par un ordinateur sur lequel est enregistré un programme d'ordinateur comprenant des instructions pour l'exécution des étapes du procédé selon l'une quelconque des revendications 1 à 8.

**Claims**

1. A method for use in an automated biological liquid analysis machine that can detect cells in the liquid and that can determine an n-tuple (xi(X1...Xn,Ci)) comprising at least four physical parameters (n>3) measured for each detected cell, said method being intended both for performing classification, by discrimination and enumeration, into a set of at least three cell classes (Ci), and also for representing them, and comprising the following steps:

a) initially, storing a plurality of mathematical transformations (Tn->m) for transforming a plurality of n-tuples into m-tuples (yj(Y1...Ym, Cj)), m<n, each transformation, associated with a particular classification of n-tuple elements within a predetermined set of cell classes (Cdi) and determined as a function of statistical knowledge about cells constituting said cell classes, enabling the cell classes (Cdi) of a biological liquid presenting the average statistical characteristics to be placed into distinct zones of the m-dimensional composite space;
b) initially, storing a plurality of filters for discrimination and reclassification (A) into at least two cell classes (Cd1, Cd2) to allow the m-tuples from at least two cell classes to be discriminated in the m-dimensional composite spaces;
c) initially, storing, for display, at least one transformation (Tn-> 1,2,3) of a plurality of n-tuples (xi(X1...Xn,Ci)) into 3-tuples, 2-tuples, or 1-tuples determined as a function of statistical knowledge about cells constituting the cell classes of a normal biological liquid, enabling the cell classes (Cdi) of a biological liquid presenting the average statistical characteristics to be placed into distinct zones of a 3-dimensional space, a 2-dimensional surface, or of a one-dimensional axis;

d) receiving a plurality of n-tuples (xi(X1...Xn,Ci)) as results of the analysis of a biological liquid;

e) associating a first arbitrary classification (Csi) with the received n-tuples;

f) selecting a subset of n-tuples as a function of their classes (Csi);

g) selecting and applying to the selected n-tuples a transformation (Tn->m) into m-tuples;

h) selecting and applying a discrimination filter (A) to the m-tuples, which entrains updating the classes (Cdi) of the n-tuples;

i) reiterating steps f), g) and h) by selecting a subset of n-tuples (Csi) and/or a distinct transformation thereof and/or a distinct filter thereof, each iteration defining a step in a discrimination algorithm, said algorithm being defined by the series of applications of transformations and filters;

j) selecting a subset of n-tuples to be displayed as m-tuples as a function of their classes;

k) applying a particular display tag (COLk) to the n-tuples as a function of their class (Ck);

l) applying to the selected n-tuples a transformation into 3-tuples, or 2-tuples, or into 1-tuples (Tn->1,2,3); and

m) displaying the result of the transformation into 3-tuples or 2-tuples on a screen (18) or on any other display medium, each discriminated cell class being represented by a dynamic two-dimensional or three-dimensional cloud of points carrying tags.

2. The method according to one of the preceding claims, **characterized in that** the physical parameters are RES, FSC, FL1 and SSC.

3. The method according to claim 2, **characterized in that** the transformation of n-tuples to 2-tuples associates with each cell a composite vector of the form Y1=C11.FSC + C12.SSC + C13.FL1 + C14.RES + C15 and Y2 = C21.FSC + C22.SSC + C23.FL1 + C24.RES + C25.

4. The method according to one of the preceding claims, **characterized in that** at least certain steps of the discrimination algorithm are repeated in order to refine the discrimination.

5. The method according to one of the preceding claims, **characterized in that** it comprises a step of storing a transformation termed "pathology" of a plurality of n-tuples to m-tuples, m<n, associated with a particular classification of a predetermined set of cell classes revealing the pathology and determined as a function of statistical knowledge about cells constituting said cell classes, enabling the cell classes of a biological liquid presenting the average statistical characteristics of the pathology to be placed into distinct zones of the m-dimensional composite space, the pathology transformation allowing a normal biological liquid to be dissociated from a biological liquid having a particular pathology.

6. The method according to one of the preceding claims, **characterized in that** the transformation of n-tuples into 2-tuples enables the cell classes of a biological liquid presenting the average statistical characteristics of the pathology to be placed into distinct zones of the composite 2-dimensional space.

7. The method according to one of the preceding claims, **characterized in that** the transformation into the two-dimensional space is such that the cell classes are classified by degree of maturity.

8. The method according to one of claims 1 to 5, **characterized in that** the transformation of n-tuples into 3-tuples enables the cell classes of a biological liquid presenting the average statistical characteristics of the pathology to be placed into distinct zones of a dynamic composite 3-dimensional space on the display.

9. A device for classifying, by discrimination and enumeration, into a set of at least three cell classes, the device being for connection to an automated biological liquid analysis machine that can detect cells in the liquid and that is capable of determining an n-tuple comprising at least four physical parameters (n>3) for each detected cell, said device comprising:

• a memory for storing:

- a plurality of mathematical transformations for transforming a plurality of n-tuples into m-tuples, m < n, each transformation, associated with a particular classification of a predetermined set of cell classes and determined as a function of statistical knowledge about cells constituting said cell classes, enabling the cell classes of a biological liquid presenting the average statistical characteristics to be placed into distinct zones of the m-dimensional composite space;

- a plurality of filters for discrimination and re-classification into at least two cell classes enabling, in the m-dimensional composite spaces, the m-tuples of at least two cell classes to be discriminated;

- for display, at least one transformation of a plurality of n-tuples into 3-tuples, 2-tuples or 1-tuples, determined as a function of statistical knowledge about cells constituting the cell classes of a normal biological liquid, enabling the cell classes of a biological liquid presenting the average statistical characteristics to be placed into distinct zones of the 3-dimensional space, or of a 2-dimensional surface, or of a one-dimensional axis;

• means for receiving a plurality of n-tuples resulting from the analysis of a biological liquid;

• means for associating a first arbitrary classification to each n-tuple;

• means for selecting a subset of n-tuples as a function of their classes;

• means for selecting at least one transformation from the plurality of transformations and at least one discrimination filter from the plurality of discrimination filters;

• data processor means for applying at least the selected transformation and the discrimination filter to the selected n-tuples and for reiterating said applications;

• means for selecting a subset of n-tuples to be displayed as m-tuples, as a function of their classes;

• data processor means for associating a particular tag with the m-tuples as a function of their class;

• data processor means for applying the transformation of the plurality of n-tuples to 3-tuples, 2-tuples or 1-tuples;

• means for displaying the result of the transformation into 3-tuples, 2-tuples or 1-tuples on a screen.

10. A computer program intended for use by a computer, processing hardware such as a field programmable gate array or any other type of programmable electronics, comprising instructions for executing the steps of the method according to any one of claims 1 to 8 when said program is executed by a computer.

11. A computer-readable recording medium having recorded thereon a computer program comprising instructions for executing the steps of the method according to any one of claims 1 to 8 is recorded.

**Patentansprüche**

1. Verfahren, das dazu bestimmt ist, in einem Automaten zur Analyse einer biologischen Flüssigkeit verwendet zu werden, der Zellen in der Flüssigkeit erfassen und ein n-Tupel (xi(X1 ... Xn,Ci)) bestimmen kann, das mindestens vier physikalische Parameter (n>3) enthält, die für jede erfasste Zelle gemessen werden, wobei das Verfahren zur Klassifizierung durch Diskriminierung und zum Zählen in einer Einheit von mindestens drei Zellenklassen (Ci) und zu ihrer Darstellung bestimmt ist und die folgenden Schritte enthält:

a) vorab eine Vielzahl von mathematischen Umwandlungen (Tn->m) einer Vielzahl von n-Tupeln in m-Tupel (yj(Y1 ... Ym, Cj)), m<n, zu speichern, wobei jede Umwandlung, die einer besonderen Klassifizierung der n-Tupel-Elemente innerhalb einer vorbestimmten Einheit von Zellenklassen (Cdi) zugeordnet ist und abhängig von statistischen Kenntnissen über die diese Zellenklassen bildenden Zellen bestimmt wird, es ermöglicht, die Zellenklassen (Cdi) einer biologischen Flüssigkeit, die die mittleren statistischen Eigenschaften aufweisen, in verschiedenen Zonen des m-dimensionalen Verbundraums einzuordnen;

b) vorab eine Vielzahl von Filtern zur Diskriminierung und Neuklassifizierung (A) in mindestens zwei Zellenklassen (Cd1, Cd2) zu speichern, was es in m-dimensionalen Verbundräumen erlaubt, die m-Tupel von mindestens zwei Zellenklassen zu diskriminieren,

c) vorab, zur Anzeige, mindestens eine Umwandlung (T->1,2,3) einer Vielzahl von n-Tupeln (xi(X1 ... Xn,Ci)) in 3-Tupel, 2-Tupel oder 1-Tupel zu speichern, die abhängig von statistischen Kenntnissen über die die Zellenklassen einer normalen biologischen Flüssigkeit bildenden Zellen bestimmt wird, was es ermöglicht, die Zellenklassen (Cdi) einer biologischen Flüssigkeit, die die mittleren statistischen Eigenschaften aufweisen, in verschiedenen Zonen des dreidimensionalen Raums, der zweidimensionalen Fläche, oder der eindimensionalen Achse anzuordnen;

d) eine Vielzahl von n-Tupeln (xi (X1 ... Xn, Ci)) zu empfangen, die Ergebnisse der Analyse einer biologischen Flüssigkeit sind;

e) den empfangenen n-Tupeln eine erste willkürliche Klassifizierung (Csi) zuzuweisen;

f) eine Teileinheit der n-Tupel abhängig von ihren Klassen (Csi) auszuwählen;

g) eine Umwandlung (Tn->m) in m-Tupel auszuwählen und an die ausgewählten n-Tupel anzuwenden;

h) ein Diskriminierungsfilter (A) auszuwählen und an die m-Tupel anzuwenden, was zur Aktualisierung der Klassen (Cdi) der n-Tupel führt;

i) die Schritte f), g) und h) zu wiederholen, indem eine Teileinheit von n-Tupeln (Csi) und/oder eine von der vorhergehenden verschiedene Umwandlung und/oder ein vom vorhergehenden verschiedenes Filter ausgewählt wird, wobei jede Iteration einen Schritt eines Diskriminierungsalgorithmus definiert, wobei dieser Algorithmus durch die Reihe der Anwendungen von Umwandlungen und Filtern definiert wird;

j) eine Teileinheit der anzuzeigenden n-Tupel, in m-Tupeln, abhängig von ihren Klassen auszuwählen;

k) an die n-Tupel einen besonderen Anzeigetag (COLk) abhängig von ihrer Klasse (Ck) anzuwenden;

l) eine Umwandlung in 3-Tupel oder 2-Tupel an die n-Tupel, oder auch in 1-Tupel (Tn-> 1,2,3) an die ausgewählten n-Tupel anzuwenden;

m) das Ergebnis der Umwandlung in 3-Tupel oder 2-Tupel auf einem Bildschirm (18) oder jedem anderen Anzeigeträger anzuzeigen, wobei jede diskriminierte Zellenklasse durch eine dynamische zweidimensionale oder dreidimensionale Wolke von Punkten dargestellt wird, die Tags tragen.

2. Verfahren nach Anspruch 1, **dadurch gekennzeichnet, dass** die physikalischen Parameter RES, FSC, FL1, SSC sind.

3. Verfahren nach Anspruch 2, **dadurch gekennzeichnet, dass** die Umwandlung von n-Tupeln in 2-Tupel jeder Zelle einen Verbundvektor der Form Y1=C11.FSC + C12.SSC + C13.FL1 + C14.RES + C15 und Y2 = C21.FSC + C22.SSC + C23.FL1 + C24.RES + C25 zuordnet.

4. Verfahren nach einem der vorhergehenden Ansprüche, **dadurch gekennzeichnet, dass** mindestens bestimmte Schritte des Diskriminierungsalgorithmus wiederholt werden, um die Diskriminierung zu verfeinern.

5. Verfahren nach einem der vorhergehenden Ansprüche, **dadurch gekennzeichnet, dass** es einen Schritt des Speicherns einer so genannten PathologieUmwandlung einer Vielzahl von n-Tupeln in m-Tupel, m<n, enthält, die einer besonderen Klassifizierung einer vorbestimmten Einheit von Zellenklassen zugeordnet ist, die die Pathologie aufzeigen, und die abhängig von statistischen Kenntnissen über die diese Zellenklassen bildenden Zellen bestimmt wird, was es ermöglicht, die Zellenklassen einer biologischen Flüssigkeit, die die mittleren statistischen Eigenschaften der Pathologie aufweisen, in verschiedenen Zonen des m-dimensionalen Verbundraums anzuordnen, wobei die Pathologieumwandlung es ermöglicht, eine normale biologische Flüssigkeit von einer biologischen Flüssigkeit zu trennen, die eine besondere Pathologie aufweist.

6. Verfahren nach einem der vorhergehenden Ansprüche, **dadurch gekennzeichnet, dass** die Umwandlung der n-Tupel in 2-Tupel es ermöglicht, die Zellenklassen einer biologischen Flüssigkeit, die die mittleren statistischen Eigenschaften der Pathologie aufweisen, in verschiedenen Zonen des zweidimensionalen Verbundraums anzuordnen.

7. Verfahren nach einem der vorhergehenden Ansprüche, **dadurch gekennzeichnet, dass** die Umwandlung in einen zweidimensionalen Raum derart ist, dass die Zellenklassen nach Reifungsgrad klassifiziert werden.

8. Verfahren nach einem der Ansprüche 1 bis 5, **dadurch gekennzeichnet, dass** die Umwandlung der n-Tupel in 3-Tupel es ermöglicht, die Zellenklassen einer biologischen Flüssigkeit, die die mittleren statistischen Eigenschaften der Pathologie aufweisen, in verschiedenen Zonen eines dynamischen dreidimensionalen Verbundraums bei der Anzeige anzuordnen.

9. Vorrichtung zur Klassifizierung durch Diskriminierung und Zählung in einer Einheit von mindestens drei Zellenklassen, die dazu bestimmt ist, mit einem Automaten zur Analyse einer biologischen Flüssigkeit verbunden zu werden, der die Zellen in der Flüssigkeit erfassen und ein n-Tupel bestimmen kann, das mindestens vier physikalische Parameter (n>3) für jede erfasste Zelle enthält, wobei die Vorrichtung enthält:

- einen Speicher, um zu speichern:

- eine Vielzahl von mathematischen Umwandlungen einer Vielzahl von n-Tupeln in m-Tupel, m<n, wobei jede Umwandlung, die einer besonderen Klassifizierung einer vorbestimmten Einheit von Zellenklassen zugeordnet ist und abhängig von statistischen Kenntnissen über die diese Zellenklassen bildenden Zellen bestimmt wird, es ermöglicht, die Zellenklassen einer biologischen Flüssigkeit, die die mittleren statistischen Eigenschaften aufweisen, in verschiedenen Zonen des m-dimensionalen Verbundraums anzuordnen;

- eine Vielzahl von Diskriminierungs- und Neuklassifizierungsfiltern in mindestens zwei Zellenklassen, die es in m-dimensionalen Verbundräumen erlauben, die m-Tupel von mindestens zwei Zellenklassen zu diskriminieren,

- für die Anzeige, mindestens eine Umwandlung einer Vielzahl von n-Tupeln in 3-Tupel, 2-Tupel, oder 1-Tupel, die abhängig von statistischen Kenntnissen über die die Zellenklassen einer normalen biologischen Flüssigkeit bildenden Zellen bestimmt wird, was es ermöglicht, die Zellenklassen einer biologischen Flüssigkeit, die die mittleren statistischen Eigenschaften aufweisen, in verschiedenen Zonen des dreidimensionalen Raums, der zweidimensionalen Fläche oder der eindimensionalen Achse anzuordnen;
- Einrichtungen zum Empfang einer Vielzahl von n-Tupeln, die Ergebnisse der Analyse einer biologischen Flüssigkeit sind;

- Einrichtungen, um jedem n-Tupel eine erste willkürliche Klassifizierung zuzuweisen,
- Einrichtungen, um eine Teileinheit der n-Tupel abhängig von ihren Klassen auszuwählen;
- Einrichtungen zur Auswahl mindestens einer Umwandlung aus der Vielzahl von Umwandlungen und mindestens eines Diskriminierungsfilters aus der Vielzahl von Diskriminierungsfiltern;
- Einrichtungen zur Datenverarbeitung, um mindestens die ausgewählte Umwandlung und das Diskriminierungsfilter an die ausgewählten n-Tupel anzuwenden und diese Anwendungen zu wiederholen;
- Einrichtungen zur Auswahl einer Teileinheit der anzuzeigenden n-Tupel, in m-Tupeln, abhängig von ihren Klassen;
- Einrichtungen zur Datenverarbeitung, um den m-Tupeln entsprechend ihrer Klasse einen besonderen Tag zuzuordnen;
- Einrichtungen zur Datenverarbeitung, um die Umwandlung der Vielzahl von n-Tupeln in 3-Tupel, 2-Tupel, oder 1-Tupel anzuwenden;
- Einrichtungen, um das Ergebnis der Umwandlung in 3-Tupel, 2-Tupel oder 1-Tupel auf einem Bildschirm anzuzeigen.

10. Computerprogramm, das dazu bestimmt ist, von einem Computer, einer Verarbeitungseinrichtung von der Art Hardware, wie ein Field Programmable Gate Array, oder jeder anderen Art von programmierbarer Elektronik durchgeführt zu werden, das Anweisungen zur Ausführung der Schritte des Verfahrens nach einem der Ansprüche 1 bis 8 aufweist, wenn das Programm von einem Computer ausgeführt wird.

11. Computerlesbarer Aufzeichnungsträger, auf dem ein Computerprogramm aufgezeichnet ist, das Anweisungen zur Ausführung des Verfahrens nach einem der Ansprüche 1 bis 8 enthält.

FIG.1

## FIG.2A

## FIG.2B

## FIG.2C

FIG.3

FIG.4A

FIG.4B

FIG.4C

FIG.4D

FIG.4E

FIG.4F

FIG.4G

FIG.4H

FIG.4I

FIG.4J

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4791355 A
- US 6630990 B
- US 6944338 B
- US 6662117 B
- WO 2006015056 A
- US 6524793 B
- US 7369696 B
- US 2008172185 A
- FR 2733596

**Littérature non-brevet citée dans la description**

- Electrical Resistance Pulse Sizing: Coulter Sizing. **VOLKER KACHEL.** Flow Cytometry and sorting. Wiley-Liss, 1990, 45-80